# EUROPÄISCHE PATENTSCHRIFT

(11) **EP 4 166 366 B1**
(45) Veröffentlichungstag und Bekanntmachung des Hinweises auf die Patenterteilung: **13.03.2024**
(21) Anmeldenummer: 22192150.5
(22) Anmeldetag: 25.08.2022
(51) Int. Cl.: B60K 15/05

(54) **KLAPPENEINHEIT FÜR EINE ÖFFNUNG AN EINEM FAHRZEUG UND FAHRZEUG**
VEHICLE AND VALVE UNIT FOR AN OPENING ON A VEHICLE
UNITÉ DE VOLET POUR UNE OUVERTURE D'UN VÉHICULE ET VÉHICULE

(30) Priorität: 25.08.2021 DE 102021209348
(43) Veröffentlichungstag der Anmeldung: 19.04.2023
(73) Patentinhaber: Witte Automotive GmbH, 42551 Velbert (DE)
(72) Erfinder: MENSCH, Reinaldo, 42113 Wuppertal (DE); HERDERING, Markus, 44866 Bochum (DE); SLOVAN, Zdenek, 301 00 Plzen 1-Severní Predmestí (CZ)
(74) Vertreter: Liedtke & Partner Patentanwälte

(56) Entgegenhaltungen:
- CZ-A3- 2 019 398
- DE-A1- 19 919 251
- DE-A1-102012 009 018
- DE-A1-102017 223 396
- DE-A1-102020 207 669
- DE-U1-202016 105 735

## Beschreibung

Die Erfindung betrifft eine Klappeneinheit zur Abdeckung einer Öffnung, insbesondere einer Ladeöffnung oder Tanköffnung an einem Fahrzeug. Des Weiteren betrifft die Erfindung ein Fahrzeug mit einer solchen Klappeneinheit.

An Fahrzeugen werden Öffnungen in der Fahrzeugkarosserie, wie zum Beispiel eine Ladeöffnung oder Tanköffnung, mittels einer Blende oder Klappe (auch Verschlussdeckel genannt) verschlossen, um eine Verschmutzung und einen Missbrauch zu verhindern. Klappen sind beispielsweise aus der nicht vor veröffentlichten

DE 10 2020 207 669 A1 oder DE 10 2012 009 018 A1 bekannt.

Aufgabe der vorliegenden Erfindung ist es, eine Klappeneinheit zur Abdeckung einer Öffnung an einem Fahrzeug bereitzustellen, welche einfach aufgebaut und einfach zu bedienen ist. Insbesondere soll eine Klappeneinheit angegeben werden, welche auch bei einer großen, insbesondere langen, Blende hinreichend dicht in einer geschlossenen Stellung gehalten ist. Des Weiteren ist es Aufgabe der Erfindung, ein Fahrzeug mit einer verbesserten Klappeneinheit anzugeben.

Die erstgenannte Aufgabe wird erfindungsgemäß gelöst durch eine Klappeneinheit mit den Merkmalen des Patentanspruchs 1. Hinsichtlich des Fahrzeugs wird die Aufgabe erfindungsgemäß mit den Merkmalen des Patentanspruchs 10 gelöst. Vorteilhafte Weiterbildungen sind Gegenstand der abhängigen Patentansprüche. Die erfindungsgemäße Klappeneinheit zur Abdeckung einer Öffnung, insbesondere eine Ladeöffnung oder Tanköffnung, eines Fahrzeugs, umfasst zumindest einen Rahmen und eine Blende, zum Beispiel einen Verschlussdeckel oder eine Verschlussklappe, die an dem Rahmen mittels eines Verstellmechanismus bewegbar angeordnet ist, wobei die Blende zwischen einer geschlossenen Position und einer geöffneten Position bewegbar ist, und wobei sowohl bei einer Öffnungsbewegung der Blende aus der geschlossenen Position in die geöffnete Position als auch bei einer Schließbewegung der Blende aus der geöffneten Position in die geschlossene Position der Verstellmechanismus um eine erste Drehachse schwenkbar ist und die Blende gegenüber dem Verstellmechanismus um eine zweite Drehachse schwenkbar und zumindest anteilig translatorisch in eine, insbesondere teilweise, angehobene Zwischenposition bewegbar ist. Die Blende ist dabei insbesondere derart kombiniert schwenk- und anteilig translatorisch in die angehobene Zwischenposition bewegbar, dass die Blende entriegelt ist.

Die Blende ist derart eingerichtet, dass diese sowohl elektrisch als auch manuell betätigt werden kann.

Die mit der Erfindung erzielten Vorteile bestehen insbesondere darin, dass mittels der teilweise angehobenen Zwischenposition der Blende zum Beispiel bei der Schließbewegung zunächst ein antriebsabgewandtes Halteende der Blende mit dem Rahmen kontaktiert, so dass bei einer weiteren Schließbewegung dieses antriebsabgewandte Halteende der Blende formschlüssig in die geschlossene, insbesondere verriegelnde, Position gebracht werden kann und sich danach ein Antriebsende der Blende flächenbündig und dichtend an den Rahmen legt. Somit ist eine höhere Dichtungskraft der Blende am Rahmen ermöglicht, da auf dem Antriebsende die Antriebskraft, insbesondere eine Motorkraft, wirkt und auf dem antriebsabgewandten Halteende der Blende ein Gegenlager gebildet ist.

Darüber hinaus ermöglicht eine solche Klappeneinheit mit Antriebsende oder Antriebsseite und verriegelndem Gegenlager auf dem antriebsabgewandten Halteende der Blende eine erhöhte Sicherheit gegen Vandalismus, da die Blende auf beiden Seiten beziehungsweise Enden formschlüssig anliegt und verriegelt wird. Darüber hinaus ist eine flächenbündige Ausrichtung der Blende am Rahmen mittels eines keilförmigen Hinterschnitts am antriebsabgewandten Halteende der Blende ermöglicht.

Bei einer Öffnungsbewegung der Blende hingegen ermöglicht die angehobene Zwischenposition, dass das Antriebsende der Blende zunächst angehoben wird und das antriebsabgewandte Halteende erst später geöffnet, insbesondere nach außen in die geöffnete Position geschwenkt, wird. Hierdurch ist eine Eisaufbrechkraft erhöht. Beispielsweise wird dies durch einen Vorlauf auf dem Antriebsende, welches zuerst in die Zwischenposition angehoben wird, ermöglicht, wobei das antriebsabgewandte Halteende der Blende weiterhin mit dem Rahmen kontaktiert. Somit ist die Blende nicht starr am Rahmen angebunden und wird nicht zeitgleich und parallel vom Rahmen entfernt.

Ein weiterer Aspekt sieht vor, dass beim Bewegen der Blende von der angehobenen Zwischenposition in die geöffnete Position und umgekehrt die Blende gemeinsam mit dem Verstellmechanismus um die erste Drehachse schwenkbar ist. Hierbei wird die Blende relativ zum Rahmen und beispielsweise zu einer Fahrzeugaußenhaut, in welcher der Rahmen montiert ist, bewegt und dabei geöffnet oder geschlossen.

Eine Weiterbildung sieht vor, dass der Verstellmechanismus zwischen Blende und Rahmen angeordnet ist. Insbesondere ist der Verstellmechanismus an dem Antriebsende der bewegbaren Blende zwischen Blende und Rahmen angeordnet.

Insbesondere ist die Blende mittels des Verstellmechanismus in der teilweise gespannten angehobenen Zwischenposition derart zum Rahmen positionierbar, dass das Antriebsende der Blende anhebbar oder angehoben ist, insbesondere zum Rahmen hin beabstandet anhebbar oder angehoben ist, und das gegenüberliegende antriebsabgewandte Ende der Blende mit dem Rahmen kontaktiert.

Ein weiteres Ausführungsbeispiel sieht vor, dass die Blende an dem Halteende, insbesondere auf der antriebsabgewandten Seite der Blende, mittels eines Verschlussmechanismus am Rahmen lösbar verriegelbar ist. Beispielsweise ist der Verschlussmechanismus als ein Rastmechanismus, insbesondere eine formschlüssige Rastverbindung, ausgebildet. In der geschlossenen Position der Blende ist somit an dem antriebsabgewandten Halteende der Blende ein Gegenlager für das Antriebsende der Blende gegeben.

In einem weiteren Ausführungsbeispiel umfasst der Verstellmechanismus ein Doppeldrehgelenk. Beispielsweise umfasst das Doppeldrehgelenk ein erstes Drehgelenk, welches an dem Rahmen angelenkt ist, und über ein Verbindungsglied mit einem zweiten Drehgelenk verbunden ist, welches an der Blende angelenkt ist. Mit anderen Worten: Gegenüber einer herkömmlichen Verstellvorrichtung für eine Blende umfasst der Verstellmechanismus der vorliegenden Blende ein zusätzliches Drehgelenk. Das Verbindungsglied ist insbesondere als ein Schwenkhebel, Koppelhebel oder Verstellhebel oder Schwenkarm, Koppelarm oder Verstellarm ausgebildet.

Das Verbindungsglied, insbesondere der Verstellhebel, ist einerseits mit der Blende gekoppelt und andererseits an dem Rahmen um die erste Drehachse mittels des ersten Drehgelenks schwenkbar gelagert. Der Verstellhebel ist beispielsweise derart ausgebildet, dass dieser die Blende aus der Ebene des Rahmens bewegt, insbesondere zunächst in die angehobene Zwischenposition schwenkt und hebt und anschließend in die geöffnete Position schwenkt.

Dabei kann der Verstellhebel einteilig ausgebildet sein. Der Verstellmechanismus weist eine am Rahmen angeordnete Gelenkpfanne für das erste Drehgelenk auf. Die Blende umfasst darüber hinaus ein inneres Lagerelement für das zweite Drehgelenk.

Die Blende kann in einer möglichen Ausführungsform einteilig ausgebildet sein. Alternativ kann die Blende mehrteilig, insbesondere zweigeteilt, ausgebildet sein.

Die Betätigung und/oder Verstellung der Blende kann manuell, zum Beispiel mittels Druckbetätigung und manueller Verstellbewegung, oder elektrisch, zum Beispiel mittels einer elektrisch bewegbaren Blende, erfolgen.

Der Verstellmechanismus kann beispielsweise mit einem Betätigungsmechanismus für die Blende gekoppelt sein. Ein elektrischer Betätigungsmechanismus ist direkt mit dem Verstellmechanismus gekoppelt und kann beispielsweise als ein Motorantrieb, insbesondere ein Spindelantrieb oder Zahnradantrieb, ausgebildet sein. Ein manueller Betätigungsmechanismus ist direkt mit der Blende gekoppelt und kann beispielsweise als eine Druckbetätigung, insbesondere eine sogenannte Push-Push-Mechanik, ausgebildet sein.

Zusätzlich kann insbesondere an dem Antriebsende der Blende, insbesondere im Bereich des zweiten Drehgelenks, ein Federelement vorgesehen sein, mittels dessen die Blende in Richtung des Rahmens gespannt in der geschlossenen Position gehalten ist. Insbesondere bei einer großflächigen Blende kann bei gespannter Feder in der geschlossenen Position ein größtmöglicher Dichtungsdruck erzeugt werden, so dass die Blende bündig mit dem Rahmen abschließt und dichtend am Rahmen anliegt. Beispielsweise ist das Federelement als eine bistabile Schenkelfeder ausgebildet.

In einem einfachen Ausführungsbeispiel sind die Drehachsen des ersten Drehgelenks und des zweiten Drehgelenks parallel zueinander angeordnet. Dabei können je nach Öffnungssinn der Blende, vertikal oder horizontal öffnend, die Drehachsen entsprechend horizontal beziehungsweise vertikal verlaufen.

Das Verbindungsglied, insbesondere ausgebildet als ein Verstellhebel, Schwenkhebel oder Koppelhebel, ist derart konfiguriert, dass es sich an dem ersten Drehgelenk um die erste Drehachse in einem ersten Bogen bewegt. Die Blende, insbesondere ein Verschlussdeckel, ist derart konfiguriert, dass sie sich an dem zweiten Drehgelenk um die zweite Drehachse in einem zweiten Bogen bewegt.

Ein erfindungsgemäßes Fahrzeug umfasst eine Öffnung, insbesondere eine Ladeöffnung oder Tanköffnung, und die zuvor beschriebene Klappeneinheit zum Abdecken der Öffnung.

Ausführungsbeispiele der Erfindung werden anhand von Zeichnungen näher erläutert. Dabei zeigen:
- Figur 1: ein Fahrzeug mit einer Öffnung und einer Klappeneinheit zum Abdecken der Öffnung,
- Figur 2: eine Schnittdarstellung einer Klappeneinheit mit einer Blende in einer geschlossenen Position,
- Figur 3: eine Schnittdarstellung einer Klappeneinheit mit einer Blende in einer angehobenen Zwischenposition, in welcher die Blende zumindest bereichsweise mit dem Rahmen kontaktiert,
- Figur 4: eine Schnittdarstellung einer Klappeneinheit mit einer Blende in einer angehobenen und zum Rahmen beabstandete Zwischenposition,
- Figur 5: eine Schnittdarstellung einer Klappeneinheit mit einer Blende in einer geöffneten Position,
- Figur 6: eine Schnittdarstellung einer Klappeneinheit mit einer Blende in einer Missbrauchsposition, und
- Figur 7: eine Schnittdarstellung einer Klappeneinheit mit einer Blende in einer Schließbewegung.

Einander entsprechende Teile sind in allen Figuren mit den gleichen Bezugszeichen versehen.

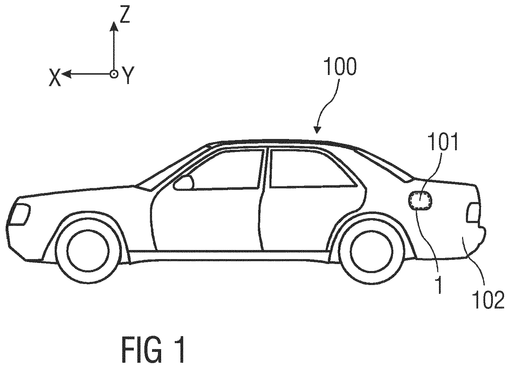

Figur 1 zeigt ein Fahrzeug 100 mit einer Öffnung 101 in einer Fahrzeugaußenhaut 102. Die Öffnung 101 ist beispielsweise eine Tanköffnung oder Ladeöffnung. Die Öffnung 101 ist beispielsweise mittels einer Klappeneinheit 1 abdeckbar, die nachfolgend näher beschrieben wird. Die Klappeneinheit 1 ist dazu im Bereich der Öffnung 101 in die Fahrzeugaußenhaut 102 montierbar.

Unter Bezugnahme auf die Zeichnungen ist nachstehend eine Klappeneinheit 1 in einem kartesischen Koordinatensystem beschrieben, das durch drei zueinander senkrechte räumliche Richtungen definiert ist. Wenn die Klappeneinheit 1 in dem Fahrzeug 100 installiert ist, verläuft eine Längsrichtung X im Wesentlichen horizontal zu und vorzugsweise parallel mit einer Längsrichtung des Fahrzeugs 100, die der gewöhnlichen Fahrtrichtung des Fahrzeugs 100 entspricht. Eine Querrichtung Y, die senkrecht zu der Längsrichtung X verläuft, ist gleichermaßen horizontal im Fahrzeug 100 orientiert und verläuft parallel zu einer Querrichtung Y des Fahrzeugs 100. Eine vertikale Richtung Z verläuft senkrecht zu der Längsrichtung X und senkrecht zu der Querrichtung Y. Eine vertikale Anordnung sollte so verstanden werden, dass damit eine Anordnung gemeint ist, die parallel zu der vertikalen Richtung Z verläuft.

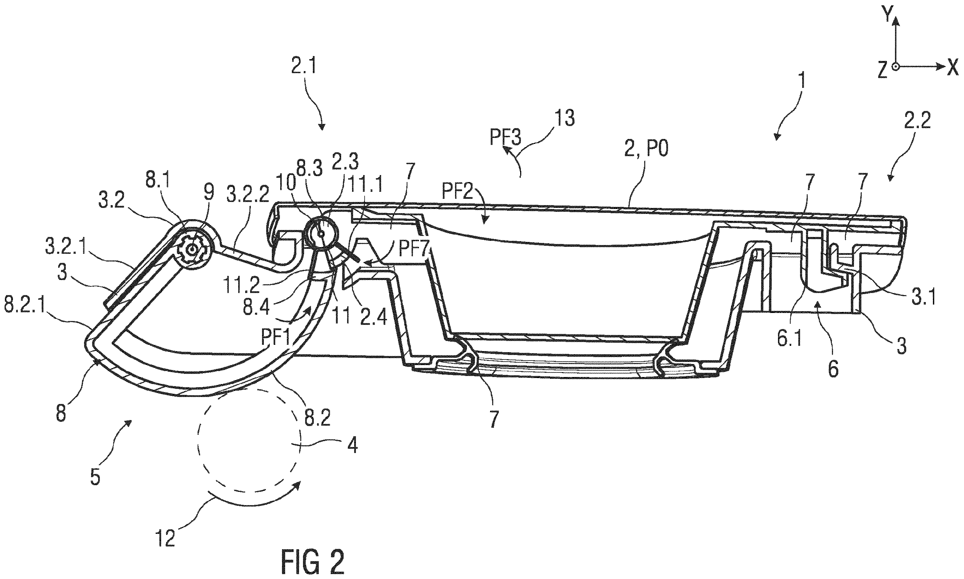

Figur 2 zeigt schematisch in Schnittdarstellung eine erste Ausführungsform einer Klappeneinheit 1 mit einer Blende 2.

Die Klappeneinheit 1 umfasst zumindest die Blende 2 und einen Rahmen 3. Die Blende 2 ist innerhalb eines Umfangsbereichs des Rahmens 3 angeordnet. Die Klappeneinheit 1 ist mit dem Rahmen 3 in die Öffnung 101 in der Fahrzeugaußenhaut 102 eingesetzt und dort fixiert. Der Rahmen 3 bildet beispielsweise einen Rand der Öffnung 101 aus.

Figur 2 zeigt die Blende 2 in einer geschlossenen Position P0, in welcher die Blende 2 insbesondere bündig mit dem Rahmen 3 abschließt. Die Blende 2 dient der Abdeckung einer Öffnung 101, insbesondere einer Ladeöffnung oder Tanköffnung, eines nicht dargestellten Fahrzeugs 100. Hierzu ist die Klappeneinheit 1 mittels des Rahmens 3 beispielsweise in einer nicht dargestellten Aufnahme einer Fahrzeugaußenhaut 102 entsprechend angeordnet und montiert, so dass die Blende 2 sowohl bündig mit dem Rahmen 3 als auch bündig mit der Fahrzeugaußenhaut 102 abschließt.

Die Blende 2 ist eine bewegbare Blende 2 und zum Beispiel als ein Verschlussdeckel oder eine Verschlussklappe für die Ladeöffnung oder Tanköffnung ausgebildet. Die Blende 2 kann wie dargestellt topfförmig ausgebildet sein. Alternativ kann die Blende 2 scheibenförmig ausgebildet sein. Vom Rahmen 3 weggewandt weist die Blende 2 eine mit einer Fahrzeugaußenhaut 102 korrespondierende Oberflächenform, insbesondere eine weitgehend ebene oder leicht gewölbte Form, auf.

Die Blende 2 ist derart eingerichtet, dass diese sowohl elektrisch als auch manuell betätigt und/oder verstellt werden kann.

Die Verstellung der Blende 2 kann elektrisch erfolgen. Ein elektrischer Antriebsmechanismus 4 ist zum Beispiel mit einem Verstellmechanismus 5 für die Blende 2 gekoppelt und kann beispielsweise als ein Motorantrieb, insbesondere ein Spindelantrieb oder Zahnradantrieb, ausgebildet sein. Der Antriebsmechanismus 4 und der Verstellmechanismus 5 sind an einem Antriebsende 2.1 der Blende 2 angeordnet und mit dieser gekoppelt.

An einem dem Antriebsende 2.1 gegenüberliegenden Halteende 2.2 der Blende 2 ist diese mit einem Verschlussmechanismus 6, zum Beispiel einem Rasthaken 6.1, versehen. Die Blende 2 ist mittels des Verschlussmechanismus 6 am Rahmen 3 lösbar verriegelbar ist. Beispielsweise ist der Verschlussmechanismus 6 als ein Rastmechanismus, insbesondere eine formschlüssige Rastverbindung, ausgebildet. In der geschlossenen Position P0 der Blende 2 ist somit auf dem antriebsabgewandten Halteende 2.2 der Blende 2 ein Gegenlager für das Antriebsende 2.1 der Blende 2 gebildet.

Der Rasthaken 6.1 greift beispielsweise in der geschlossenen Position P0 der Blende 2 in einen Hinterschnitt 3.1 des Rahmens 3 lösbar verriegelnd ein.

Die Blende 2 ist in Richtung des Rahmens 3 innenseitig mit einer Dichtung 7, zum Beispiel einem Dichtungsring, Dichtungslippen und/oder Dichtungsstrang, versehen. Zusätzlich oder alternativ kann der Rahmen 3 in Richtung der Blende 2 mit einer Dichtung 7, insbesondere einem Dichtungsring, Dichtungslippen und/oder Dichtungsstrang, versehen sein.

Der Verstellmechanismus 5 kann alternativ mit einem manuellen, nicht näher dargestellten Betätigungsmechanismus für die Blende 2 gekoppelt sein. Ein solcher manueller Betätigungsmechanismus ist insbesondere direkt mit der Blende 2 gekoppelt und kann beispielsweise als eine Druckbetätigung, insbesondere eine sogenannte Push-Push-Mechanik, an der Blende 2 ausgebildet sein.

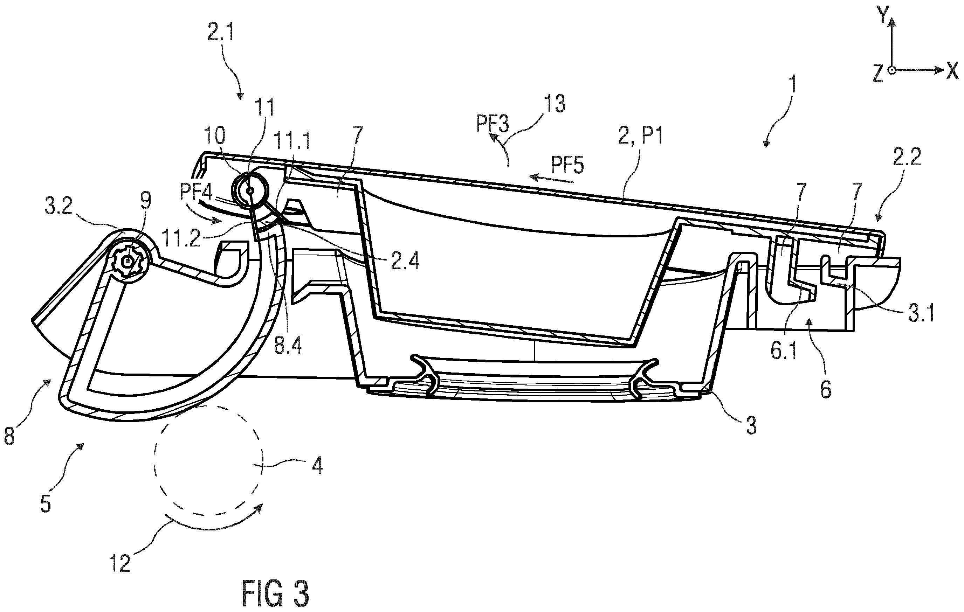

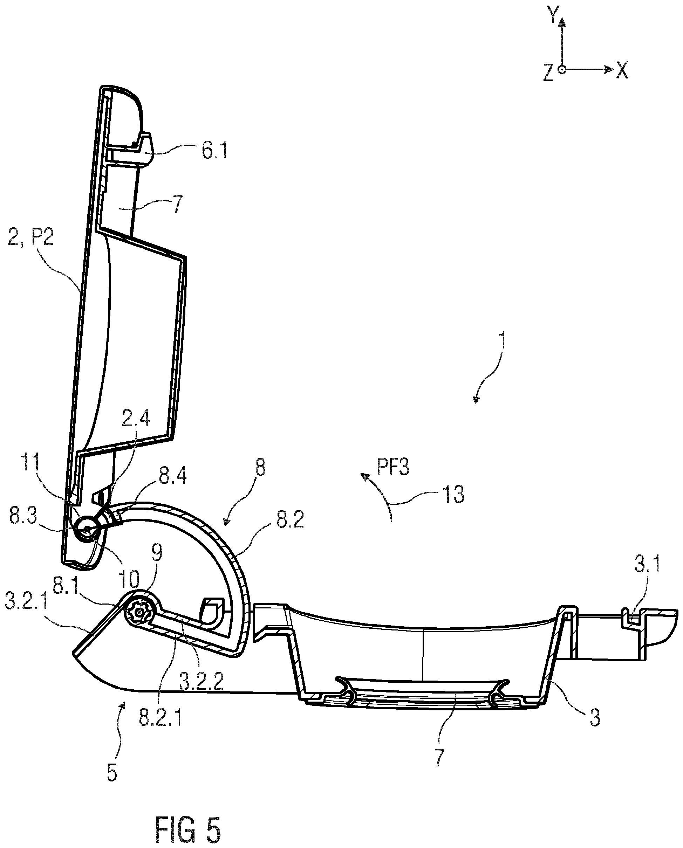

Mittels des Verstellmechanismus 5 ist die Blende 2 sowohl bei einer Öffnungsbewegung der Blende 2 aus der geschlossenen Position P0 in eine geöffnete Position P2 (dargestellt in Figur 5) als auch bei einer Schließbewegung der Blende 2 aus der geöffneten Position P2 in die geschlossene Position P0 um eine erste Drehachse 9 schwenkbar, wobei die Blende 2 gegenüber dem Verstellmechanismus 5 um eine zweite Drehachse 10 schwenkbar und zumindest anteilig translatorisch in eine teilweise angehobene Zwischenposition P1 (dargestellt in Figur 3) bewegbar ist.

Beim Bewegen der Blende 2 von der teilweise angehobenen Zwischenposition P1 in die geöffnete Position P2 und umgekehrt ist die Blende 2 gemeinsam mit dem Verstellmechanismus 5 um die erste Drehachse 9 schwenkbar.

Der Verstellmechanismus 5 kann als ein Doppeldrehgelenk 8 ausgebildet sein. Beispielsweise umfasst das Doppeldrehgelenk 8 ein erstes Drehgelenk 8.1, welches an dem Rahmen 3 angelenkt ist, und über ein Verbindungsglied 8.2 mit einem zweiten Drehgelenk 8.3 verbunden ist, welches an der Blende 2 angelenkt ist.

Gegenüber einer herkömmlichen Verstellvorrichtung für eine Blende 2 umfasst der Verstellmechanismus 5 der vorliegenden Blende 2 ein zusätzliches Gelenk, insbesondere das zweite Drehgelenk 8.3.

Das Verbindungsglied 8.2 ist insbesondere als ein Schwenkhebel, Koppelhebel oder Verstellhebel oder Schwenkarm, Koppelarm oder Verstellarm ausgebildet.

Das Verbindungsglied 8.2 ist einerseits mit der Blende 2 gekoppelt und andererseits an dem Rahmen 3 um die erste Drehachse 9 mittels des ersten Drehgelenks 8.1 schwenkbar gelagert. Die Blende 2 ist mittels des schwenkbar gelagerten Verbindungsglieds 8.2 relativ zum Rahmen 3 schwenkbar gelagert.

Das Verbindungsglied 8.2 kann einteilig ausgebildet sein. Der Verstellmechanismus 5 weist eine am Rahmen 3 angeordnete Gelenkpfanne 3.2 für das erste Drehgelenk 8.1 auf. Die Gelenkpfanne 3.2 ist im Bereich des Antriebsende 2.1 ausgebildet. Das Verbindungsglied 8.2 ist im Schnitt als ein 2-schenkliger, L-förmiger, hakenförmiger oder bogenförmiger Schwenkhebel ausgebildet. Das Verbindungsglied 8.2 weist an einem dem Rahmen 3, insbesondere der Gelenkpfanne 3.2, zugewandten Ende das erste Drehgelenk 8.1 und an einem der Blende 2 zugewandten Ende einen Verstellzapfen 8.4 auf. Das erste Drehgelenk 8.1 ist hülsenförmig oder zylindrisch oder kugelförmig ausgebildet.

Von der Gelenkpfanne 3.2 stehen zwei Anschlagsarme 3.2.1 und 3.2.2 ab, welche als Endanschläge für den Verstellmechanismus 5 der Blende 2, insbesondere für das Doppeldrehgelenk 8, beispielsweise für dessen Verbindungsglied 8.2, dienen. Die Anschlagsarme 3.2.1 und 3.2.2 stehen derart von der Gelenkpfanne 3.2 ab, dass die Schwenkbewegung der Blende 2 zwischen der geschlossenen Position P0 und der geöffneten Position P2 (dargestellt in Figur 5) begrenzt wird. Dazu schlägt zumindest ein Schenkel 8.2.1 des Verbindungsgliedes 8.2 in der geschlossenen Position P0 an dem Anschlagarm 3.2.1 (dargestellt in Figur 2) und in der geöffneten Position P2 an dem Anschlagarm 3.2.2 (dargestellt in Figur 5) an.

Die Blende 2 weist darüber hinaus ein inneres Lagerelement 2.3 für das zweite Drehgelenk 8.3 auf. Die Blende 2 ist mittels des zweiten Drehgelenks 8.3 um die zweite Drehachse 10 relativ zum Rahmen 3 und zum Verbindungsglied 8.2 schwenkbar gelagert.

Die Blende 2 kann in einer möglichen Ausführungsform einteilig ausgebildet sein. Alternativ kann die Blende 2 mehrteilig, insbesondere zweigeteilt, ausgebildet sein.

Zusätzlich kann auf der Antriebsseite, dem Antriebsende 2.1, der Blende 2, insbesondere im Bereich des zweiten Drehgelenks 8.3, ein Federelement 11 vorgesehen sein. Mittels des Federelements 11 ist die Blende 2 vorgespannt in der geschlossenen Position P0 an dem Rahmen 3 gehalten.

Insbesondere bei einer großflächigen Blende 2 kann in der geschlossenen Position P0 bei gespanntem Federelement 11 ein größtmöglicher Dichtungsdruck erzeugt werden, so dass die Blende 2 bündig mit dem Rahmen 3 abschließt und mittels der Dichtungen 7 dichtend am Rahmen 3 anliegt. Beispielsweise ist das Federelement 11 als eine bistabile Schenkelfeder ausgebildet.

Das Federelement 11 weist zwei Federarme 11.1, 11.2 auf. In der geschlossenen Position P0 der Blende 2 ist das Federelement 11 gespannt. Die Federkraft des Federelements 11 zieht die beiden Federarme 11.1 und 11.2 zueinander, wie anhand der Pfeile PF 1 gezeigt. Hierdurch werden sowohl der Blendenzapfen 2.4 als auch der Verstellzapfen 8.4 mit einer zugehörigen Federkraft des betreffenden Federarms 11.1 beziehungsweise 11.2 beaufschlagt. Infolge dieser Federkraft des Federelements 11 wird die Blende 2 gemäß Pfeil PF2 in Richtung des Rahmens 3 gezogen, so dass die Blende 2 formschlüssig und dichtend an dem Rahmen 3 anliegt.

In einem einfachen Ausführungsbeispiel sind die erste Drehachse 9 des ersten Drehgelenks 8.1 und die zweite Drehachse 10 des zweiten Drehgelenks 8.3 parallel zueinander angeordnet. Dabei können die Drehachsen 9, 10 je nach Öffnungssinn der Blende 2, vertikal oder horizontal öffnend, entsprechend horizontal beziehungsweise vertikal verlaufen. Im Ausführungsbeispiel verlaufen die Drehachsen 9, 10 vertikal und die Blende 2 kann in horizontaler Richtung gemäß Pfeil PF3 geöffnet werden.

Das Verbindungsglied 8.2, insbesondere ausgebildet als ein Verstellhebel, Schwenkhebel oder Koppelhebel, ist derart konfiguriert, dass es sich an dem ersten Drehgelenk 8.1 um dessen erste Drehachse 9 in einem ersten Bogen 12 bewegt. Die Blende 2, insbesondere ein Verschlussdeckel, ist derart konfiguriert, dass er sich an dem zweiten Drehgelenk 8.3 um dessen zweite Drehachse 10 in einem zweiten Bogen 13 gemäß Pfeil PF3 bewegt.

Sowohl bei einer Öffnungsbewegung aus der geschlossenen Position P0 der Blende 2 als auch bei einer Schließbewegung aus der geöffneten Position P2 der Blende 2 ist die Blende 2 jeweils in die teilweise angehobene Zwischenposition P1 bewegbar, die in Figur 3 dargestellt ist.

Figur 3 zeigt eine Schnittdarstellung der Klappeneinheit 1 mit der Blende 2 in der teilweise angehobenen Zwischenposition P1, in welcher die Blende 2 zumindest bereichsweise mit dem Rahmen 3 kontaktiert.

Insbesondere ist die Blende 2 mittels des Verstellmechanismus 5 in der teilweise angehobenen Zwischenposition P1 derart zum Rahmen 3 positionierbar oder positioniert, dass das Antriebsende 2.1 der Blende 2 angehoben und von dem Rahmen 3 beabstandet ist und das gegenüberliegende antriebsabgewandte Halteende 2.2 der Blende 2 mit dem Rahmen 3 weiterhin kontaktiert, wobei die Blende 2 bereits entriegelt ist. Der Rasthaken 6.1 ist außer Eingriff von dem Hinterschnitt 3.1 gelangt, der beispielsweise als ein Rastvorsprung am Rahmen 3 ausgebildet ist.

Der Verstellmechanismus 5 ist beispielsweise derart ausgebildet, dass dieser die Blende 2 aus der Ebene des Rahmens 3 bewegt, insbesondere zunächst in die angehobene Zwischenposition P1 schwenkt. Beispielsweise ist der Verstellmechanismus 5 derart eingerichtet, dass die Blende 2 zunächst in dem ersten Bogen 12 um die erste Drehachse 9 bewegt wird, so dass das Antriebsende 2.1 gegenüber dem Rahmen 3 und der Fahrzeugaußenhaut 102 angehoben wird und das Halteende 2.2 entriegelt wird. Dabei bleibt das gegenüber liegende Halteende 2.2 weiterhin in Kontakt mit dem Rahmen 3. Alternativ kann die Klappeneinheit 1 rahmenlos ausgebildet sein. In einem solchen alternativen Ausführungsbeispiel kontaktiert die Blende 2 mit ihrem Halteende 2.2 weiterhin die Fahrzeugaußenhaut 102.

Zusätzlich entspannt das Federelement 11, wobei der Federarm 11.2 in Richtung der Blende 2 gemäß Pfeil PF4 bewegt wird, so dass die Blende 2 relativ zum Verstellmechanismus 5 um die zweite Drehachse 10 in einem zweiten Bogen 13 gemäß Pfeil PF3 schwenkt und zumindest anteilig translatorisch gemäß Pfeil PF5 bewegt wird, so dass das Antriebsende 2.1 der Blende 2 angehoben und die Blende 2 entriegelt wird, insbesondere der Rasthaken 6.1 außer Eingriff vom Hinterschnitt 3.1 gelangt.

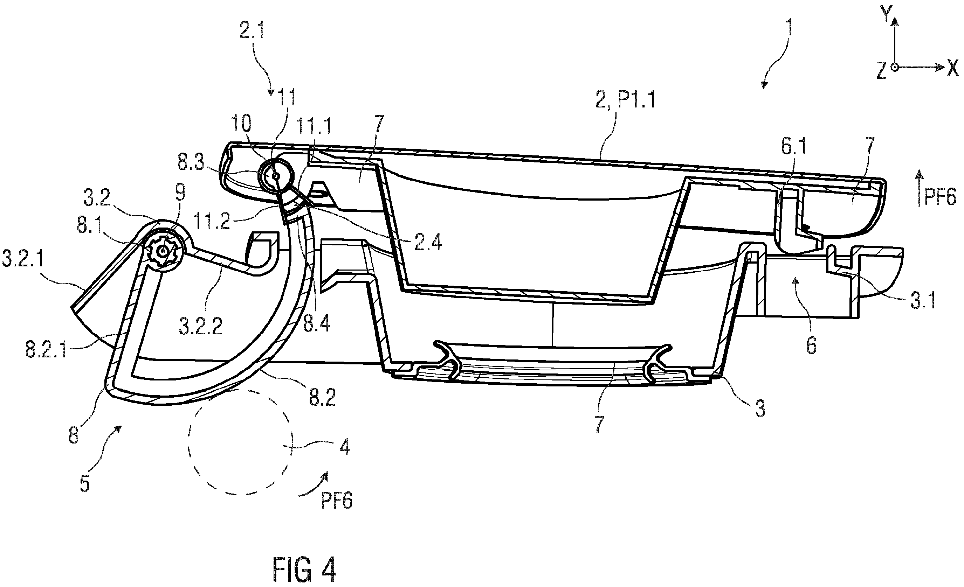

Figur 4 zeigt eine Schnittdarstellung der Klappeneinheit 1 mit der Blende 2 in einer vollständig angehobenen, insbesondere zum Rahmen 3 vollständig beabstandete Zwischenposition P1.1, in welcher das Halteende 2.2 der Blende 2 nicht mehr mit dem Rahmen 3 kontaktiert. In diese vollständig angehobene Zwischenposition P1.1 gelangt die Blende 2 durch weitere Bewegung des Verstellmechanismus 5, insbesondere des Verbindungsgliedes 8.2, um die erste Drehachse 9 gemäß Pfeil PF6. Dabei wird die Blende 2 gemeinsam mit dem Verbindungsglied 8.2 um die erste Drehachse 9 geschwenkt. Das Federelement 11 bleibt entspannt.

Figur 5 zeigt eine Schnittdarstellung der Klappeneinheit 1 mit der Blende 2 in der geöffneten Position P2. In der geöffneten Position P2 ist die Blende 2 weitgehend senkrecht zum Rahmen 3 gestellt. Das Federelement 11 bleibt entspannt. Die Blende 2 ist gemeinsam mit dem Verstellmechanismus 5 um die erste Drehachse 9 gemäß Pfeil PF 3 in die geöffnete Position P2 geschwenkt worden.

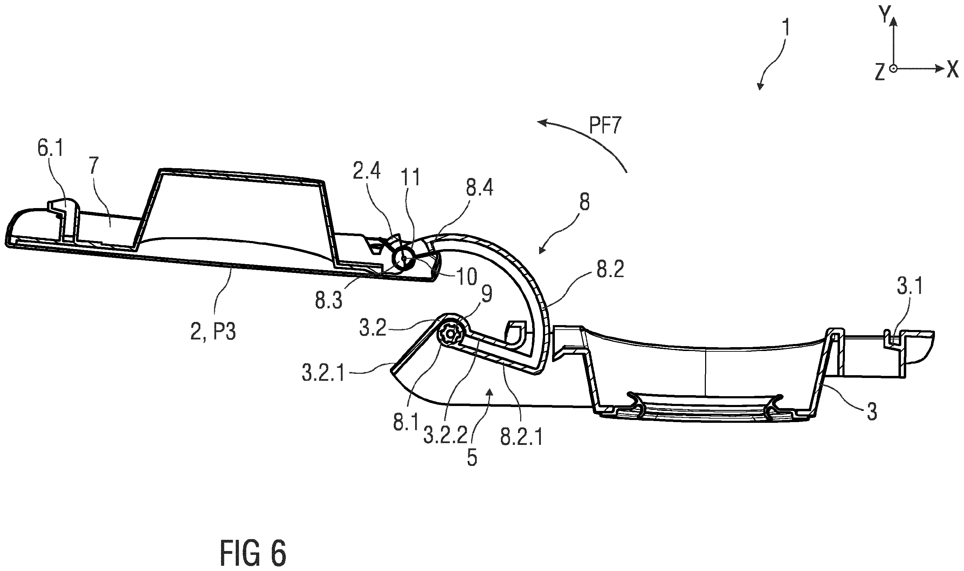

Figur 6 zeigt eine Schnittdarstellung der Klappeneinheit 1 mit der Blende 2 in einer Missbrauchsposition P3. Dabei wurde die Blende 2 relativ zum Verstellmechanismus 5 um die zweite Drehachse 10 gemäß Pfeil PF7 manuell betätigt, insbesondere geschwenkt. Der Verstellmechanismus 5 ist aufgrund des Anschlagens des Schenkels 8.2.1 am Anschlagarm 3.2.2 des Rahmens 3 festgestellt. Somit kann die Blende 2 mittels des zweiten Drehgelenks 8.3 relativ zum Rahmen 3 und zum Verstellmechanismus 5 um die zweite Drehachse 10 geschwenkt werden. Das Federelement 11 wird dabei gespannt, indem der Blendenzapfen 2.4 bei der Schwenkbewegung der Blende 2 gemäß Pfeil PF7 den entsprechenden Federarm 11.1 mitnimmt. Wird nun die Blende 2 nicht mehr betätigt, so wird diese aufgrund der Entspannung des Federelements 11 selbsttätig in die geöffnete Position P2 und weiter zurückgestellt bis das Federelement 11 entspannt ist.

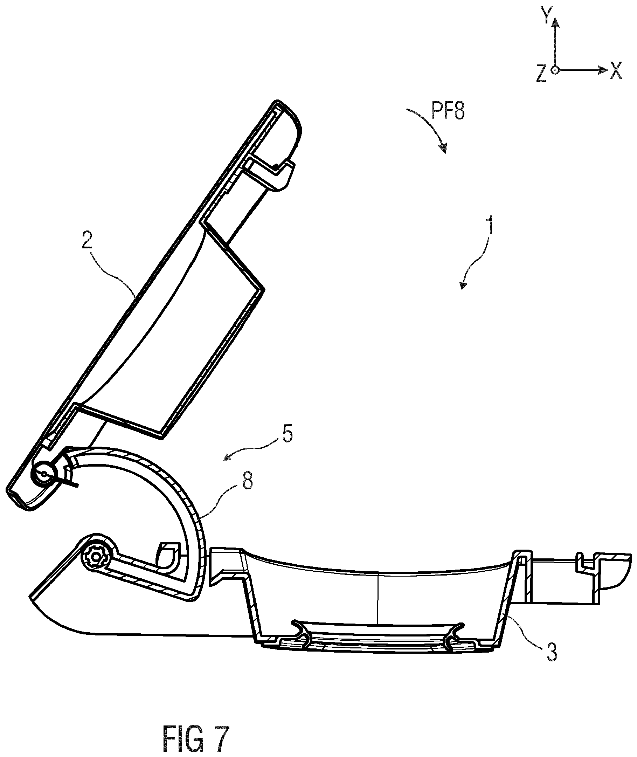

Figur 7 zeigt eine Schnittdarstellung der Klappeneinheit 1 mit der Blende 2 bei einer Schließbewegung der Blende 2 infolge der Entspannung des Federelements 11 gemäß Pfeil PF8.

### BEZUGSZEICHENLISTE

- 1: Klappeneinheit
- 2: Blende
- 2.1: Antriebsende
- 2.2: Halteende
- 2.3: Lagerelement
- 2.4: Blendenzapfen
- 3: Rahmen
- 3.1: Hinterschnitt
- 3.2: Gelenkpfanne
- 3.2.1, 3.2.2: Anschlagarm
- 4: Antriebsmechanismus
- 5: Verstellmechanismus
- 6: Verschlussmechanismus
- 6.1: Rasthaken
- 7: Dichtung
- 8: Doppeldrehgelenk
- 8.1: erstes Drehgelenk
- 8.2: Verbindungsglied
- 8.2.1: Schenkel
- 8.3: zweites Drehgelenk
- 8.4: Verstellzapfen
- 9: erste Drehachse
- 10: zweite Drehachse
- 11: Federelement
- 11.1, 11.2: Federarme
- 12: erster Bogen
- 13: zweiter Bogen

- 100: Fahrzeug
- 101: Öffnung
- 102: Fahrzeugaußenhaut

- PF1-PF8: Pfeile
- P0: geschlossene Position
- P1: teilweise angehobene Zwischenposition
- P1.1: vollständig angehobene Zwischenposition
- P2: geöffnete Position
- X: Längsrichtung
- Y: Querrichtung
- Z: vertikale Richtung

## Patentansprüche

1. Klappeneinheit (1) zur Abdeckung einer Öffnung (101), insbesondere eine Ladeöffnung oder Tanköffnung, eines Fahrzeugs (100), wobei die Klappeneinheit (1) zumindest:
- einen Rahmen (3), und
- eine Blende (2) umfasst, die am Rahmen (3) mittels eines Verstellmechanismus (5) bewegbar angeordnet ist,
wobei die Blende (2) zwischen einer geschlossenen Position (P0) und einer geöffneten Position (P2) bewegbar ist, und
wobei die Blende (2) in der geschlossenen Position (P0) verriegelbar oder verriegelt ist, **dadurch gekennzeichnet, dass**
sowohl bei einer Öffnungsbewegung der Blende (2) aus der geschlossenen Position (P0) in die geöffnete Position (P2), als auch bei einer Schließbewegung der Blende (2) aus der geöffneten Position (P2) in die geschlossene Position (P0), der Verstellmechanismus (5) um eine erste Drehachse (9) schwenkbar ist und die Blende (2) gegenüber dem Verstellmechanismus (5) um eine zweite Drehachse (10) schwenkbar und zumindest anteilig translatorisch in eine teilweise angehobene Zwischenposition (P1) bewegbar ist
und
wobei die Blende (2) mittels des Verstellmechanismus (5) in der teilweise angehobenen Zwischenposition (P1) derart zum Rahmen (3) positionierbar oder positioniert ist, dass ein Antriebsende (2.1) der Blende (2) vom Rahmen (3) beabstandet angehoben ist und ein gegenüberliegendes antriebsabgewandtes Halteende (2.2) der Blende (2) mit dem Rahmen (3) kontaktiert.

2. Klappeneinheit (1) nach Anspruch 1, wobei beim Bewegen der Blende (2) von der Zwischenposition (P1) in die geöffnete Position (P2) und umgekehrt die Blende (2) gemeinsam mit dem Verstellmechanismus (5) um die erste Drehachse (9) schwenkbar ist.

3. Klappeneinheit (1) nach Anspruch 1 oder 2, wobei der Verstellmechanismus (5) zwischen Blende (2) und Rahmen (3) angeordnet ist.

4. Klappeneinheit (1) nach einem der vorhergehenden Ansprüche, wobei die Blende (2) an dem Halteende (2.2) mittels eines Verschlussmechanismus (6) an dem Rahmen (3) lösbar verriegelbar ist.

5. Klappeneinheit (1) nach einem der vorhergehenden Ansprüche, wobei der Verstellmechanismus (5) ein Doppeldrehgelenk (8) umfasst, wobei ein erstes Drehgelenk (8.1) an dem Rahmen (3) angelenkt ist und über ein Verbindungsglied (8.2) mit einem zweiten Drehgelenk (8.3) verbunden ist, welches an der Blende (2) angelenkt ist.

6. Klappeneinheit (1) nach Anspruch 5, wobei im Bereich des zweiten Drehgelenks (8.3) ein Federelement (11) vorgesehen ist, mittels dessen die Blende (2) in Richtung des Rahmens (3) gespannt in der geschlossenen Position (P0) gehalten ist.

7. Klappeneinheit (1) nach Anspruch 6, wobei das Federelement (11) als eine bistabile Schenkelfeder ausgebildet ist.

8. Klappeneinheit (1) nach einem der Ansprüche 5 bis 7, wobei das Verbindungsglied (8.2) konfiguriert ist, sich an dem ersten Drehgelenk (8.1) um die erste Drehachse (9) in einem ersten Bogen (12) zu bewegen.

9. Klappeneinheit (1) nach einem der Ansprüche 5 bis 8, wobei die Blende (2) konfiguriert ist, sich an dem zweiten Drehgelenk (8.3) um die zweite Drehachse (10) in einem zweiten Bogen (13) zu bewegen.

10. Fahrzeug (100) mit einer Öffnung (101) und einer Klappeneinheit (1) nach einem der vorhergehenden Ansprüche zum Abdecken der Öffnung (101).

11. Fahrzeug (100) nach Anspruch 10, wobei die Öffnung (101) eine Ladeöffnung oder eine Tanköffnung ist.

## Claims

1. Flap unit (1) for covering an opening (101), in particular a loading opening or fuel filler opening, of a vehicle (100), the flap unit (1) comprising at least:
- a frame (3), and
- a cover (2) which is arranged on the frame (3) such that it is movable by means of an adjusting mechanism (5),
the cover (2) being movable between a closed position (P0) and an open position (P2), and
the cover (2) being lockable or locked in the closed position (P0), **characterized in that**,
both in the case of an opening movement of the cover (2) out of the closed position (P0) into the open position (P2) and in the case of a closing movement of the cover (2) out of the open position (P2) into the closed position (P0), the adjusting mechanism (5) is pivotable about a first rotational axis (9), and the cover (2) is pivotable about a second rotational axis (10) with respect to the adjusting mechanism (5) and is at least proportionally movable translationally into a partially raised intermediate position (P1),
and
the cover (2) being positionable or positioned with respect to the frame (3) in the partially raised intermediate position (P1) by means of the adjusting mechanism (5) in such a way that a drive end (2.1) of the cover (2) is raised in a manner which is spaced apart from the frame (3) and an opposite holding end (2.2), facing away from the drive, of the cover (2) making contact with the frame (3).

2. Flap unit (1) according to Claim 1, the cover (2) being pivotable together with the adjusting mechanism (5) about the first rotational axis (9) during the movement of the cover (2) from the intermediate position (P1) into the open position (P2) and vice versa.

3. Flap unit (1) according to Claim 1 or 2, the adjusting mechanism (5) being arranged between the cover (2) and the frame (3).

4. Flap unit (1) according to one of the preceding claims, the cover (2) being lockable releasably at the holding end (2.2) to the frame (3) by means of a closure mechanism (6).

5. Flap unit (1) according to one of the preceding claims, the adjusting mechanism (5) comprising a double rotary joint (8), a first rotary joint (8.1) being articulated on the frame (3) and being connected via a connecting member (8.2) to a second rotary joint (8.3) which is articulated on the cover (2) .

6. Flap unit (1) according to Claim 5, a spring element (11) being provided in the region of the second rotary joint (8.3), by means of which spring element (11) the cover (2) is held in the closed position (P0) such that it is loaded in the direction of the frame (3) .

7. Flap unit (1) according to Claim 6, the spring element (11) being configured as a bistable leg spring.

8. Flap unit (1) according to one of Claims 5 to 7, the connecting member (8.2) being configured to move on the first rotary joint (8.1) about the first rotational axis (9) in a first arc (12).

9. Flap unit (1) according to one of Claims 5 to 8, the cover (2) being configured to move on the second rotary joint (8.3) about the second rotational axis (10) in a second arc (13).

10. Vehicle (100) with an opening (101) and a flap unit (1) according to one of the preceding claims for covering the opening (101).

11. Vehicle (100) according to Claim 10, the opening (101) being a loading opening or a fuel filler opening.

## Revendications

1. Unité formant volet (1) destinée à recouvrir une ouverture (101) , notamment une ouverture de chargement ou une ouverture de réservoir, d'un véhicule (100), l'unité formant volet (1) comprenant au moins :
- un cadre (3), et
- un panneau (2) qui est disposé sur le cadre (3) de manière mobile au moyen d'un mécanisme de réglage (5),
le panneau (2) étant mobile entre une position fermée (P0) et une position ouverte (P2), et le panneau (2) étant verrouillé ou pouvant être verrouillé dans la position fermée (P0), **caractérisée en ce que**
aussi bien lorsque le panneau (2) s'ouvre de la position fermée (P0) à la position ouverte (P2) que lorsque le panneau (2) se ferme de la position ouverte (P2) à la position fermée (P0), le mécanisme de réglage peut pivoter sur un premier axe de rotation (9) et le panneau (2) peut pivoter sur un deuxième axe de rotation (10) par rapport au mécanisme de réglage (5) et peut être déplacé au moins partiellement en translation jusque dans une position intermédiaire partiellement soulevée (P1) et
le panneau (2) étant positionné ou pouvant être positionné par rapport au cadre (3) au moyen du mécanisme de réglage (5) dans la position intermédiaire partiellement soulevée (P1) de manière à ce qu'une extrémité d'entraînement (2.1) du panneau (2) soit soulevée à distance du cadre (3) et une extrémité de retenue opposée (2.2) du panneau (2), laquelle est opposée à l'entraînement, soit en contact avec le cadre (3).

2. Unité formant volet (1) selon la revendication 1, lors du déplacement du panneau (2) de la position intermédiaire (P1) à la position ouverte (P2) et vice versa, le panneau (2) pouvant pivoter conjointement avec le mécanisme de réglage (5) sur le premier axe de rotation (9).

3. Unité formant volet (1) selon la revendication 1 ou 2, le mécanisme de réglage (5) étant disposé entre le panneau (2) et le cadre (3).

4. Unité formant volet (1) selon l'une des revendications précédentes, le panneau (2) pouvant être verrouillé au niveau de l'extrémité de retenue (2.2) de manière amovible sur le cadre (3) au moyen d'un mécanisme de verrouillage (6).

5. Unité formant volet (1) selon l'une des revendications précédentes, le mécanisme de réglage (5) comprenant une double articulation pivotante (8), une première articulation pivotante (8.1) étant articulée sur le cadre (3) et étant reliée à une deuxième articulation pivotante (8.3), qui est articulée sur le panneau (2), par le biais d'un élément de liaison (8.2).

6. Unité formant volet (1) selon la revendication 5, un élément à ressort (11), qui permet de maintenir le panneau (2) dans la position fermée (P0) en le contraignant en direction du cadre (3), étant prévu dans la zone de la deuxième articulation tournante (8.3) .

7. Unité formant volet (1) selon la revendication 6, l'élément à ressort (11) étant conçu comme un ressort à branches bistable.

8. Unité formant volet (1) selon l'une des revendications 5 à 7, l'élément de liaison (8.2) étant conçu pour se déplacer sur le premier axe de rotation (9) suivant un premier arc (12) au niveau de la première articulation pivotante (8.1).

9. Unité formant volet (1) selon l'une des revendications 5 à 8, le panneau (2) étant conçu pour se déplacer sur le deuxième axe de rotation (10) suivant un deuxième arc (13) au niveau de la deuxième articulation pivotante (8.3).

10. Véhicule (100) comprenant une ouverture (101) et une unité formant volet (1) selon l'une des revendications précédentes destinée à recouvrir l'ouverture (101).

11. Véhicule (100) selon la revendication 10, l'ouverture (101) étant une ouverture de chargement ou une ouverture de réservoir.
